**Europäisches Patentamt**

**European Patent Office**

**Office européen des brevets**

(19)

(11) Veröffentlichungsnummer: **0 062 103 B1**

(12) **EUROPÄISCHE PATENTSCHRIFT**

(45) Veröffentlichungstag der Patentschrift:
20.03.85

(21) Anmeldenummer: 81108729.5

(22) Anmeldetag: 22.10.81

(51) Int. Cl.⁴: **G 02 B 6/24, H 01 P 1/00**

(54) **Prismenkoppler zur Ein- und/oder Auskopplung von Strahlung in oder aus einem optischen Wellenleiter.**

(30) Priorität: 31.03.81 DE 3112939

(43) Veröffentlichungstag der Anmeldung:
13.10.82 Patentblatt 82/41

(45) Bekanntmachung des Hinweises auf die Patenterteilung:
20.03.85 Patentblatt 85/12

(84) Benannte Vertragsstaaten:
**AT BE CH DE FR GB IT LI NL SE**

(56) Entgegenhaltungen:
**DD - A - 111 473**
**US - A - 3 719 411**
**US - A - 4 152 045**

(73) Patentinhaber: **Siemens Aktiengesellschaft, Berlin und München Wittelsbacherplatz 2, D-8000 München 2 (DE)**

(72) Erfinder: **Auracher, Franz, Dr. Ph. D. Dipl.-Ing., Eichenstrasse 26, D-8021 Buchenhain b. Baierbrunn (DE)**
Erfinder: **Keil, Rudolf, Dr. Dipl.-Ing., Weitlstrasse 58, D-8000 München 45 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf einen Prismenkoppler zur Ein- und/oder Auskopplung von Strahlung in oder aus einem optischen Wellenleiter nach dem Oberbegriff des Patentanspruchs 1.

Bei der Ein- oder Auskopplung von Licht in bzw. aus optischen Wellenleitern mittels eines Prismas ist der Koppelwinkel $\alpha$ in der Regel temperaturabhängig.

Die Aufgabe der vorliegenden Erfindung betsteht darin, generell aufzuzeigen, wie bei einem Prismenkoppler der eingangs genannten Art der Koppelwinkel temperaturunabhängig gemacht werden kann.

Diese Aufgabe wird durch die im kennzeichnenden Teil des Patentanspruchs 1 angegebenen Merkmale gelöst.

Bevorzugte und vorteilhafte Ausführungsformen der Erfindung gehen aus den Ansprüchen 2 und 3 hervor.

Die Erfindung wird anhand der Figuren in der folgenden Beschreibung näher erläutert. Von den Figuren zeigen:

Figur 1 in schematischer Darstellung einen axialen Schnitt durch einen aus einem Einzelprisma bestehenden Prismenkoppler, der auf einen Wellenleiter aufgesetzt ist,

Figur 2 in einem Diagramm einen Bereich geeigneter Werte des Brechungsindex $n_p$ und des Temperaturkoeffizienten $a_p$ eines Prismas zur Lichteinkopplung in einen LiNbO$_3$-Wellenleiter, bei denen der Koppelwinkel $\alpha$ temperaturunabhängig ist,

Figur 3 in schematischer Darstellung einen axialen Schnitt durch einen Prismenkoppler aus einem auf einen Wellenleiter aufgesetzten zusammengesetzten Prisma, das aus zwei aus unterschiedlichen Materialien bestehenden Prismen besteht und

Figur 4 ein Diagramm, in dem der funktionelle Zusammenhang zwischen dem Koppelwinkel und Prismenwinkeln der Einzelprismen des in Figur 3 dargestellten Prismenkopplers für temperaturunabhängigen Koppelwinkel $\alpha$ für einen Wellenleiter in LiNbO$_3$ und ein aus einem Prisma aus LiNbO$_3$ und einem Vorsatzprisma aus Polystyrol zusammengesetzten Prisma grafisch dargestellt ist.

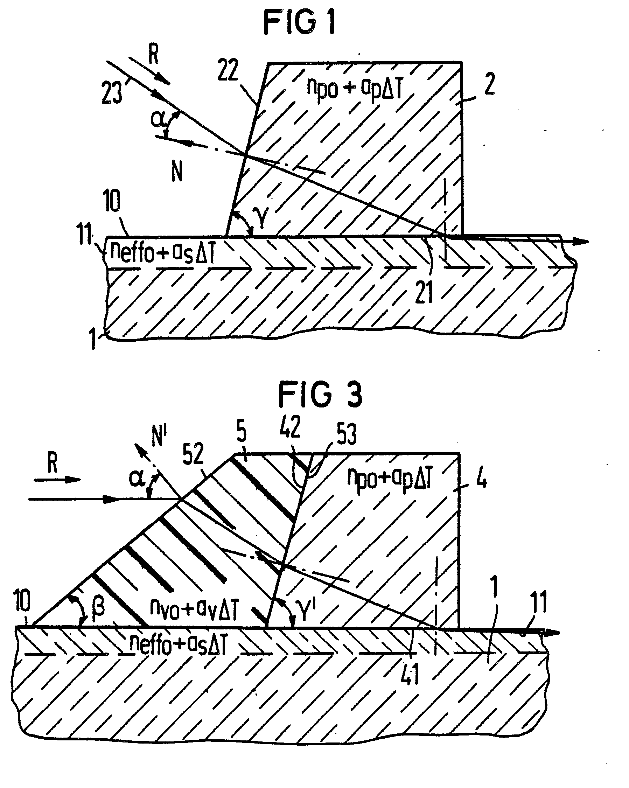

In der Figur 1 ist mit 1 ein Substrat aus LiNbO$_3$ bezeichnet, in das an einer Oberfläche 10 ein planarer Wellenleiter 11 eindiffundiert oder anderweitig eingebracht ist. Der planare Wellenleiter 11 weist einen effektiven Brechungsindex $n_{eff}$ auf.

Auf den Wellenleiter 11 ist mit einer Basisfläche 21 ein Einzelprisma 2 aufgesetzt, das eine in einem Prismenwinkel $\gamma$ zur Basisfläche 21 stehende Koppelfläche 22 aufweist. Der Koppelfläche 22 ist die einzukoppelnde Strahlung, repräsentiert durch den Strahl 23, in einer Richtung R zuzuführen, die mit der Flächennormalen N der Koppelfläche 22 einen bestimmten Koppelwinkel einschliesst, oder die ausgekoppelte Strahlung wird entgegengesetzt zu der genannten Richtung R von der Koppelfläche 22 abgestrahlt.

Die Einkopplung erfolgt nur unter dem bestimmten Koppelwinkel $\alpha$, der durch die Gleichung

$$\alpha = \arcsin \left[ n_p \cdot \sin \left( \gamma - \arcsin \frac{n_{eff}}{n_p} \right) \right] \qquad (1)$$

bestimmt ist. In dieser Gleichung bedeutet $n_p$ den Brechungsindex des Prismenmaterials und dieser Brechungsindex muss grösser sein als der effektive Brechungsindex $n_{eff}$ des im Wellenleiter 11 geführten Lichtmodes.

Der Koppelwinkel $\alpha$ ist in der Regel temperaturabhängig, weil $n_p$ und $n_{eff}$ temperaturabhängig sind und eine Änderung von $n_p$ und $n_{eff}$ mit der Temperatur in die Gleichung (1) eingeht. Dabei gilt im interessanten Temperaturbereich von —40°C bis 85°C in guter Näherung eine lineare Abhängigkeit für die genannten Brechungsindizes, d.h. es gilt

$$n_p = n_{po} + a_p \cdot \Delta T \text{ und } n_{eff} = n_{effo} + a_s \cdot \Delta T;$$

$$\Delta T = T - T_0 \qquad (2)$$

wobei $T_0$ eine vorbestimmte Temperatur, beispielsweise die Umgebungstemperatur, $n_{po}$ und $n_{effo}$ den Brechungsindex bzw. effektiven Brechungsindex des Prismas bzw. Wellenleiters bei der Temperatur $T_0$ bedeuten, und $a_p = dn_p/dT/T = T_0$ bzw. $a_s = dn_{eff}/dT/T = T_0$, also die Differentialquotienten der beiden Brechungsindizes $n_p$ bzw. $n_{eff}$ nach der Temperatur bei der bestimmten Temperatur $T_0$ bedeuten.

Die Bedingung für eine temperaturunabhängige Lichteinkopplung kann nach Einsetzen der Gleichungen (2) in Gleichung (1) ermittelt werden. Bei Vernachlässigung der quadratischen Temperaturglieder $T^2$ ergibt sich:

$$a_p = a_s \left( \frac{n_{effo}}{n_{po}} + \frac{1}{\text{tg } \gamma} \sqrt{1 - \left( \frac{n_{effo}}{n_{po}} \right)^2} \right) \qquad (3)$$

wobei noch die Nebenbedingung

$$\left| \sin\gamma \sqrt{n^2_{po} - n^2_{effo}} - n_{effo} \cdot \cos\gamma \right| =$$

$$= |\sin\alpha| \leqslant 1 \qquad (4)$$

zu erfüllen ist.

Bei vorgewählten Werten von $n_{effo}$ und $a_s$ bestimmen die Gleichung (3) und die Ungleichung (4) einen Bereich von möglichen Werten von $n_{po}$ und $a_p$, bei denen der Koppelwinkel $\alpha$ temperaturunabhängig ist. Dieser Bereich ist durch eine Kurve $a_p = f(n_p)$ begrenzt, die sich aus der Gleichung (3) und der Gleichung

$$\left| \sin\alpha \sqrt{n^2_{po} - n^2_{effo}} - n_{effo} \cos\gamma \right| = 1 \qquad (4')$$

bestimmt. In der Figur 3 sind in einem Diagramm die Kurve $a_p = f(n_p)$ für einen bestimmten Diffusionswellenleiter 11 in LiNbO$_3$ dargestellt, für den $n_{effo} = 2,201$, $a_s = 5,45 \times 10^{-5}$ 1/grad bei $\lambda_0 = 633$ nm gilt und wobei eine Temperatur $T_0 = 20°C$ angenommen ist. Der von dieser Kurve begrenzte schraffierte Bereich in Figur 3 ist der Bereich möglicher Werte von $n_{po}$ und $a_p$, bei denen der Koppelwinkel $\alpha$ temperaturunabhängig ist.

Hat man bei vorgewähltem Wellenleiter, also bei vorgegebenem $n_{effo}$ und $a_s$ bei der vorgewählten Temperatur $T_0$ ein Material für das Prisma frei ausgewählt, bei dem bei der vorgewählten Temperatur $T_o$ die Grössen $n_{po}$ und $a_p$ mögliche Werte aufweisen, so lassen sich aus der Gleichung (3) der zugehörige Prismenwinkel $\gamma$ und dann aus Gleichung (1) der zugehörige Koppelwinkel $\alpha$ bestimmen. Ein aus einem solchen Material gefertigtes und mit einem solchen Prismenwinkel versehenes Prisma kompensiert den Temperaturgang des Brechungsindex $n_{eff}$ des bestimmten Wellenleiters wenigstens in erster Näherung.

Aus der Figur 3 lässt sich sehr leicht entnehmen, dass für Diffusionswellenleiter in LiNbO$_3$ weder mit einem Prisma aus LiNbO$_3$ ($n_{po}$ = 2,291 bei $T_O$ = 20°C und $a_p$ = $10^{-5}$ 1/grad) noch mit einem Rutilprisma (ordentlicher Brechungsindex $n_o$ = 2,586 und $dn_o/dT$ = —3,5 × $10^{-5}$ 1/grad; ausserordentlicher Brechungsindex $n_e$ = 2,872 und $dn_e/dT$ = —8 × $10^{-5}$ 1/grad (siehe zu den genannten Daten «Optische Konstanten» Bd. II/8)) eine temperaturunabhängige Einkopplung möglich ist, weil bei beiden Materialien die angegebenen Werte nicht in den schraffierten Bereich in Figur 3 fallen und damit keine möglichen Werte sind. Diese beiden häufig verwendeten Prismenmaterialien scheiden also in dem speziellen Fall aus und man müsste nach anderen geeigneten Materialien suchen.

Man kann aber auch mit für Einzelprismen ungeeigneten Prismenmaterialien, im genannten speziellen Fall also mit LiNbO$_3$ und Rutil einen Prismenkoppler aufbauen, bei dem der Koppelwinkel $\alpha$ temperaturunabhängig ist. Dazu wird ein aus zwei oder mehreren aus unterschiedlichen Materialien bestehenden Prismen zusammengesetztes Prisma verwendet.

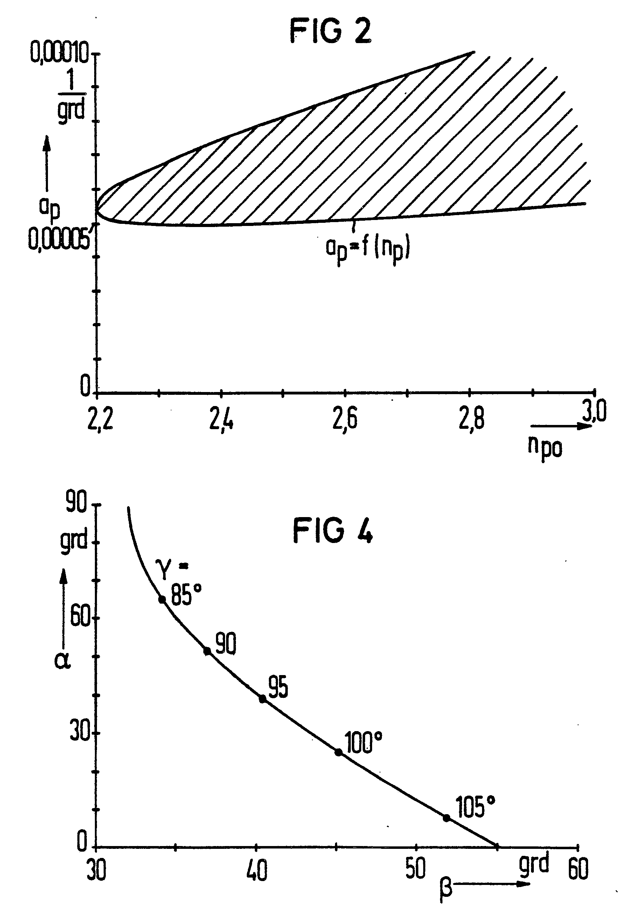

Eine entsprechende Anordnung ist in der Figur 4 dargestellt. Bei dieser Anordnung ist einem mit einer Basisfläche 41 auf den Wellenleiter 11 aufgesetzten Prisma aus LiNbO$_3$ mit einem Prismenwinkel $\gamma'$ zwischen der Basisfläche 41 und einer Koppelfläche 42 ein Vorsatzprisma 5 aus einem anderen Material vorgesetzt.

Dieses Vorsatzprisma 5 ist ebenfalls mit einer Basisfläche 51 auf den Wellenleiter 11 aufgesetzt und weist eine von dem Prisma 4 aus LiNbO$_3$ abgewandte Koppelfläche 52 auf, die mit der Basisfläche 51 einen Prismenwinkel $\beta$ des Vorsatzprismas 5 einschliesst. Eine weitere Koppelfläche des Vorsatzprismas liegt der Koppelfläche 42 des Prismas 4 gegenüber und steht in flächigem Kontakt mit dieser.

Das Vorsatzprisma 5 weist einen Brechungsindex $n_v$ = $n_{vo}$ + $a_v \cdot \Delta T$ auf, wobei $n_{vo}$ den Brechungsindex bei der vorgewählten Temperatur $T_o$ und $a_v$ = $dn_v/dT/T$ = $T_o$ bedeuten.

Für den auf die Flächennormale N' der Koppelfläche 52 des Vorsatzprismas 5 bezogenen Koppelwinkel $\alpha$ gilt dann:

$$\alpha = \arcsin \left[ \sin(\gamma' - \beta) \sqrt{n^2_v - n^2_p \sin^2\left(\gamma' - \arcsin\frac{n_{eff}}{n_p}\right)} \right.$$

$$\left. - n_p \cos(\gamma' - \beta) \cdot \sin\left(\gamma' - \arcsin\frac{n_{eff}}{n_p}\right) \right] \quad (5)$$

wobei $n_p$ und $a_p$ sich auf das Prisma 4 aus LiNbO$_3$ und $n_{eff}$ und $a_s$ auf den Wellenleiter 11 beziehen und durch die Gleichungen (2) definiert sind. Setzt man die rechte Seite der vorstehend angegebenen Gleichung für $n_v$ und die rechten Seiten der Gleichungen (2) in die Gleichung (5) ein und vernachlässigt wieder die quadratischen Glieder $T^2$, so erhält man für einen temperaturunabhängigen Koppelwinkel $\alpha$ die Gleichungen

$$n_{vo} = \left[ \left( \sqrt{n_{po} - n_{eff}\frac{\sin\gamma'}{\sin(\gamma' - \beta)}} + \frac{\sin\alpha}{tg(\gamma' - \beta)} \right.\right.$$

$$\left.\left. - n_{effo}\frac{\cos\gamma'}{\sin(\gamma' - \beta)} \right)^2 + \sin^2\alpha \right]^{1/2} \quad (6)$$

und

$$a_v =$$

$$\frac{\sqrt{n^2_{po} - n^2_{effo}}\ \sin\gamma' + \sin\alpha \cdot \cos(\gamma' - \beta) - n_{effo} \cdot \cos\gamma'}{n_{vo}\ \sin^2(\gamma' - \beta)}$$

$$\cdot \left( \frac{a_p n_{po} - a_s n_{effo}}{\sqrt{n^2_{po} - n^2_{effo}}} \cdot \sin\gamma' - a_s\cos\gamma' \right) \quad (7)$$

mit der Nebenbedingung

$$\left| \sin(\gamma' - \beta) \cdot \sqrt{n^2_v - \sin^2\alpha} - \cos(\gamma' - \beta)\ \sin\alpha \right| \le n_v \quad (8)$$

Für die genannte Kombination Diffusionswellenleiter in LiNbO$_3$, aufgesetztes Prisma aus LiNbO$_3$ und Vorsatzprisma aus einem anderen Material erhält man aus den Gleichungen (6) und (7) keine Lösungen für ein Vorsatzprisma mit den Parametern von optischen Gläsern, bei denen $n_{vo}$ etwa zwischen 1,4 und 1,8 und $a_v$ etwa zwischen —$10^{-5}$ 1/grad und $10^{-5}$ 1/grad liegen (siehe beispielsweise Optik Katalog 3050/66, Jenaer Glaswerke Schott).

Es existieren jedoch Lösungen für Vorsatzprismen aus optischen Kunststoffen, bei denen $n_{vo}$ etwa zwischen 1,4 und 1,7 und $a_v$ etwa zwischen —2 × $10^{-4}$ 1/grad und —$10^{-4}$ 1/grad liegen (siehe beispielsweise «Optische Konstanten» Bd. II/8).

Als ein geeigneter Kunststoff für ein Vorsatzprisma 5 für ein Prisma 4 aus LiNbO$_3$ hat sich Polystyrol erwiesen. Bei einer Temperatur $T_o$ = 20°C gilt für Polystyrol $n_{vo}$ = 1,59 und $a_v$ = —1,66 × $10^{-4}$ 1/grad (siehe beispielsweise «Optische Konstanten» Bd. II/8).

In der Figur 5 ist ein Diagramm für die in Figur 4 dargestellte Prismenkombination dargestellt, aus dem jeweils drei Winkel, ein Koppelwinkel $\alpha$, ein Prismenwinkel $\beta$ des Vorsatzprismas aus Polystyrol und ein Prismenwinkel $\gamma'$ des Prismas 4 aus LiNbO$_3$ entnehmbar sind, bei denen der Koppelwinkel $\alpha$ temperaturunabhängig ist.

Für eine Prismenkombination mit temperaturunabhängigem Koppelwinkel $\alpha$, bei dem die Strahlrichtung der ein- oder auszukoppelnden Strahlung axial zum Wellenleiter 11 ist, weist das Prisma 4 aus LiNbO$_3$ einen Prismenwinkel $\gamma'$ = 89,2° und das Vorsatzprisma aus Polystyrol einen Prismenwinkel $\beta$ = 36,4° auf. Weitere für ein Vorsatzprisma geeignete optische Kunststoffe sind beispielsweise Acrylglas (PMMA) und Polycarbonat.

**Patentansprüche**

1. Prismenkoppler zur Ein- und/oder Auskopplung von Strahlung in bzw. aus einem optischen Wellenleiter (11), bestehend aus einem Prisma (2; 4 mit 5), das mit einer Basisfläche (21; 41 mit 51) auf den Wellenleiter (11) aufgesetzt ist, und das eine in einem Prismenwinkel ($\gamma$; $\beta$) zur Basisfläche stehende Koppelfläche (22; 52) aufweist, welcher die einzukoppelnde bzw. von welcher die auszukoppelnde Strahlung in einer mit der Flächennormalen (N; N') der Koppelfläche (22; 52) einen durch Prismenwinkel ($\gamma$; $\beta$, $\gamma'$) und Brechungsindizes ($n_p$, $n_v$, $n_{eff}$) von Prisma (2; 4 mit 5) und Wellenleiter (11) eindeutig bestimmten Koppelwinkel ($\alpha$) einschliessenden Richtung (R) zuzuführen ist bzw. abgestrahlt wird, dadurch gekennzeichnet, dass Prismenwinkel ($\gamma$) und Prismenmaterial so ausgewählt sind, dass ein Temperaturgang des Brechungsindex ($n_p$) des Prismas (2) und ein Temperaturgang des Brechungsindex ($n_{eff}$) des Wellenleiters (11) sich kompensieren, oder dass das Prisma (4 mit 5) aus zwei oder mehreren Prismen (4, 5) aus unterschiedlichen Materialien zusammengesetzt ist und die Prismenmaterialien und Prismenwinkel ($\beta$, $\gamma'$) dieser mehreren Prismen (4, 5) so gewählt sind, dass der Temperaturgang des Brechungsindex ($n_{eff}$) des Wellenleiters (11) durch das zusammengesetzte Prisma (4 mit 5) kompensiert wird.

2. Prismenkoppler nach Anspruch 1 gekennzeichnet durch einen in ein Substrat (1) aus LiNbO₃ durch Dotierung des Substrats erzeugten planaren Wellenleiter (11) auf den ein zusammengesetztes Prisma (4 mit 5) aufgesetzt ist, das aus einem Prisma (4) aus LiNbO₃ oder Rutil und aus einem Prisma (5) aus Polystyrol, Acrylglas oder Polycarbonat zusammengesetzt ist.

3. Prismenkoppler nach Anspruch 2, dadurch gekennzeichnet, dass das Substrat (1) und eines (4) der beiden Prismen (4, 5) des zusammengesetzten Prismas aus LiNbO₃ bestehen, dass das andere Prisma (5) aus Polystyrol besteht, dass jedes der beiden Prismen mit einer Basisfläche (41 bzw. 51) auf den Wellenleiter (11) aufgesetzt ist und eine in einem Prismenwinkel ($\gamma'$ bzw. $\beta$) zur Basisfläche (41 bzw. 51) stehende Koppelfläche (42 bzw. 52) aufweist, dass das Prisma (5) aus Polystyrol eine weitere Koppelfläche (53) aufweist, welche die Koppelfläche (42) des Prismas (4) aus LiNbO₃ flächig berührt, und dass der Prismenwinkel ($\gamma'$) des Prismas (4) aus LiNbO₃ und der Prismenwinkel ($\beta$) des Prismas (5) aus Polystyrol sich aus der Gleichung

$$n_{vo} = [(\sqrt{n_{po} - n_{eff}\frac{\sin\gamma'}{\sin(\gamma'-\beta)}} + \frac{\sin\alpha}{tg(\gamma'-\beta)} - n_{effo}\frac{\cos\gamma'}{\sin(\gamma'-\beta)})^2 + \sin^2\alpha]^{1/2}$$

und der Ungleichung

$$|\sin(\gamma'-\beta)\cdot\sqrt{n^2_v - \sin^2\alpha} - \cos(\gamma'-\beta)\cdot\sin\alpha| \leq 2$$

errechnen, wobei die Koppelfläche (52) des Prismas (5) aus Polystyrol die Koppelfläche des zusammengesetzten Prismas bildet.

**Claims**

1. A prism coupler for the input and/or output coupling of radiation into and/or out of an optical waveguide (11), said coupler consisting of a prism (2; 4 and 5) which is placed with a base surface (21; 41 and 51) on the waveguide (11), and which has a coupling surface (22; 52) which is arranged at a prism angle ($\gamma$; $\beta$) to the base surface and to which the radiation to be input-coupled is to be supplied, or from which the radiation to be output-coupled is to be radiated, as the case may be, in a direction (R) which makes a coupling angle ($\alpha$) with the normal to the surface (N; N') of the coupling surface (22; 52) which angle is unequivocally determined by the prism angle ($\gamma$; $\beta$; $\gamma'$) and the refractive indices ($n_p$, $n_v$, $n_{eff}$) of the prism (2; 4 and 5) and the waveguide (11), characterised in that the prism angle ($\gamma$) and the prism material are so selected that a variation with temperature of the refractive index ($n_p$) of the prism (2) and a variation with temperature of the refractive index ($n_{eff}$) of the waveguide (11) compensate one another, or that the prism (4 and 5) is made up of two or more prisms (4, 5) made of different materials and the prism materials and prism angles ($\beta$, $\gamma'$) of the plurality of prisms (4, 5) are so selected that the variation with temperature of the refractive index ($n_{eff}$) of the waveguide (11) is compensated by the composite prism (4 and 5).

2. A prism coupler according to claim 1, characterised by a planar waveguide (11) which is introduced into a substrate (1) made of LiNbO₃ by doping the substrate and onto which a composite prism (4 and 5) is placed, which prism is made up of a prism (4) made of LiNbO₃ or rutile, and a prism (5) made of polystyrene, acrylic glass, or polycarbonate.

3. A prism coupler according to claim 2, characterised in that the substrate (1) and one (4) of the two prisms (4, 5) of the composite prism consists of LiNbO₃; that the other prism (5) consists of polystyrene; that each of the two prisms is placed with a base surface (41 and 51) on the waveguide, and has a coupling surface (42 and 52) which is arranged at a prism angle ($\gamma'$ or $\beta$) to the base surface (41 and 51); that the prism (5) made of polystyrene has a further coupling surface (53) which forms a surface contact with the coupling surface (42) of the prism (4) which is made of LiNbO₃; and that the prism angle ($\gamma'$) of the prism (4) made of LiNbO₃ and the prism angle ($\beta$) of the prism (5) made of polystyrene are calculated from the equation

$$n_{vo} = [(\sqrt{n_{po} - n_{eff}\frac{\sin\gamma'}{\sin(\gamma'-\beta)}} + \frac{\sin\alpha}{tg(\gamma'-\beta)} - n_{effo}\frac{\cos\gamma'}{\sin(\gamma'-\beta)})^2 + \sin^2\alpha]^{1/2}$$

and the inequality

$$|\sin(\gamma'-\beta)\cdot\sqrt{n^2_v - \sin^2\alpha} - \cos(\gamma'-\beta)\sin\alpha| \leq 2$$

where the coupling surface (52) of the prism (5) which is made of polystyrene forms the coupling surface of the composite prism.

### Revendications

1. Coupleur à prisme pour le couplage et/ou le découplage d'un rayonnement dans ou hors d'un guide d'ondes d'optiques (11) constitué par un prisme (2; 4 avec 5) qui est apposé sur le guide (11) par une surface de base (21; 41 avec 51) et qui possède une surface de couplage (22; 52) faisant un angle de prisme ($\gamma$; $\beta$) par rapport à la surface de base et à laquelle le rayonnement devant être injecté par couplage doit être envoyé ou par laquelle le rayonnement devant être extrait par découplage doit être émis suivant une direction (R) faisant avec la normale (N; N') à la surface de couplage (22; 52) un angle de couplage ($\alpha$) déterminé de façon nette par l'angle du prisme ($\gamma$; $\beta$, $\gamma'$) et l'indice de réfraction ($n_p$, $n_v$, $N_{eff}$) du prisme (2; 4 avec 5) et du guide d'ondes (11), caractérisé par le fait que l'angle ($\gamma$) et le matériau du prisme sont choisis de telle manière qu'une allure en température de l'indice de réfraction ($n_p$) du prisme (2) et une allure en température de l'indice de réfraction ($n_{eff}$) du guide d'ondes (11) se compensent, ou bien que le prisme (4 avec 5) est formé par l'assemblage de deux ou plusieurs prismes (4, 5) constitués en des matériaux différents et que les matériaux et les angles ($\beta$, $\gamma'$) de ces différents prismes (4, 5) sont choisis de telle manière que l'allure en température de l'indice de réfraction ($n_{eff}$) du guide d'ondes (11) est compensée par le prisme composite (4 avec 5).

2. Coupleur à prisme suivant la revendication 1, caractérisé par un guide d'ondes plan (11) réalisé par dopage dans un substrat (1) et sur lequel est apposé un prisme composite (4 avec 5), qui est constitué par l'assemblage d'un prisme (4) en LiNbO$_3$ ou en rutile et d'un prisme (5) en polystyrène, en verre acrylique ou en polycarbonate.

3. Coupleur à prisme suivant la revendication 2, caractérisé par le fait que le substrat (1) et l'un (4) des deux prismes (4, 5) du prisme composite qui sont constitués par du LiNbO$_3$, que l'autre prisme (5) est constitué par du polystyrène, que chacun des deux prismes est apposé par une surface de base (41 ou 51) sur le guide d'ondes (11) et possède une surface de couplage (42 ou 52) faisant un angle de prisme ($\gamma'$ ou $\beta$) avec la surface de base (41 ou 51), que le prisme (5) en polystyrène possède une autre surface de couplage (53) qui contacte sur une certaine étendue la surface de couplage (42) du prisme (4) en LiNbO$_3$, et que l'angle ($\gamma'$) du prisme (4) en LiNbO$_3$ et l'angle ($\beta$) du prisme (5) en polystyrène se calculent conformément à la relation

$$n_{vo} = [(\sqrt{n_{po} - n_{eff}}\frac{\sin \gamma'}{\sin (\gamma' - \beta)} + \frac{\sin \alpha}{tg (\gamma' - \beta)} - n_{effo}\frac{\cos \gamma'}{\sin (\gamma' - \beta)})^2 + \sin^2 \alpha]^{1/2}$$

et à l'inégalité

$$|\sin(\gamma' - \beta) \cdot \sqrt{n^2_v - \sin^2\alpha} - \cos(\gamma' - \beta) \sin\alpha| \leq 2$$

la surface de couplage (52) du prisme (5) en polystyrène constituant la surface de couplage du prisme composite.

# FIG 1

# FIG 3

# FIG 2

$a_p = f(n_p)$

# FIG 4